Europäisches Patentamt

European Patent Office

Office européen des brevets

(19)

(11) EP 0 745 866 A1

(12) DEMANDE DE BREVET EUROPEEN

(43) Date de publication:
04.12.1996 Bulletin 1996/49

(51) Int Cl.⁶: **G01S 3/786**, G06T 7/20

(21) Numéro de dépôt: 96400960.9

(22) Date de dépôt: 06.05.1996

(84) Etats contractants désignés:
BE CH DE ES GB GR IT LI NL PT SE

(30) Priorité: 01.06.1995 FR 9506516

(71) Demandeur: AEROSPATIALE SOCIETE
NATIONALE INDUSTRIELLE
75016 Paris (FR)

(72) Inventeurs:
• Le Gouzouguec, Anne
  92170 Vanves (FR)
• Schlossers, Christophe
  92320 Chatillon (FR)

(74) Mandataire: Bonnetat, Christian
CABINET BONNETAT
23, Rue de St. Pétersbourg
75008 Paris (FR)

(54) **Procédé et dispositif pour détecter le mouvement d'une cible et leurs applications**

(57)     La présente invention concerne un dispositif (1)
et un procédé pour détecter le mouvement d'une cible
(C) observée dans le champ de vision d'un détecteur
optique (2).
Ledit procédé est remarquable en ce que :

a) on détermine une image différentielle à partir de
deux prises de vue successives dudit champ de
vision ;

b) à partir de l'image différentielle et d'un seuil de
binarisation, on forme une image binaire ;

c) on individualise sur l'image binaire des zones de
mouvement ;

d) on détermine des enveloppes individuelles entourant lesdites zones ;

e) on détermine une enveloppe globale entourant
lesdites enveloppes individuelles ; et

f) à partir desdites enveloppes individuelles et globale, on détermine s'il y a un mouvement de la cible.

FIG.1

**Description**

La présente invention concerne un procédé pour détecter le mouvement d'une cible observée dans le champ de vision d'un détecteur optique et un dispositif pour la mise en oeuvre dudit procédé, ainsi que des applications dudit procédé pour la localisation d'une cible.

Bien que non exclusivement, la présente invention est particulièrement bien adaptée à des dispositifs de poursuite de cibles, associés par exemple à des moyens de destruction des cibles poursuivies et déterminant la localisation et éventuellement le mouvement de la cible, à partir du traitement de prises de vue du champ de vision d'un détecteur optique associé observant ladite cible.

L'une des principales difficultés dans un tel traitement de prises de vue réside dans la nécessité d'effectuer le traitement, en l'occurrence la détection de mouvement, en temps réel, puisque, dans les applications considérées, les résultats doivent être immédiatement disponibles.

De plus, la détection de mouvement envisagée doit pouvoir être effectuée, même ou surtout, lorsque la cible n'est pas exactement centrée dans la prise de vue traitée, ce qui pose bien entendu de nombreux problèmes techniques.

La présente invention a pour objet de remédier à ces inconvénients. Elle concerne un procédé permettant de détecter, de façon précise et rapide, le mouvement d'une cible observée dans le champ de vision d'un détecteur optique, à partir de deux prises de vue successives dudit champ de vision, chacune desdites prises de vue étant formée d'une matrice de pixels.

A cet effet, selon l'invention, ledit procédé est remarquable en ce que l'on effectue les opérations suivantes :

a) on détermine une image différentielle à partir de deux images d'analyse de tailles identiques correspondant respectivement à au moins une partie desdites prises de vue successives, ladite image différentielle correspondant à une matrice de pixels, et la valeur de chacun des pixels de ladite matrice correspondant à la valeur absolue de la différence des niveaux de gris des pixels situés à la même position respectivement dans lesdites deux images d'analyse ;
b) à partir de ladite image différentielle et d'un seuil de binarisation déterminé, on forme une image binaire, les pixels de ladite image binaire prenant une première valeur si les valeurs des pixels correspondants de l'image différentielle sont supérieures ou égales audit seuil de binarisation, et une seconde valeur sinon ;
c) on individualise sur ladite image binaire les zones dont les pixels présentent ladite première valeur ;
d) on détermine, pour chacune desdites zones individualisées, une enveloppe individuelle, de forme déterminée de préférence rectangulaire, entourant ladite zone individualisée ;
e) on détermine une enveloppe globale, de forme déterminée de préférence rectangulaire, entourant les enveloppes individuelles ainsi formées ; et
f) on déduit :

.   s'il existe moins de deux enveloppes individuelles et/ou si l'enveloppe globale présente une surface qui est inférieure à une surface prédéterminée, qu'il n'y a pas de détection de mouvement de la cible ;
.   sinon, qu'un mouvement de la cible est détecté, un gabarit caractéristique correspondant audit mouvement de la cible et relatif à la position de la cible dans la seconde desdites prises de vue pouvant être déterminé dans ce cas.

Ainsi, grâce à l'invention, on est en mesure de déterminer de façon rapide et précise tout mouvement de la cible, en mettant en oeuvre des étapes de traitement simples.

De plus, grâce audit gabarit caractéristique, on arrive à déterminer les caractéristiques de la cible en mouvement, comme précisé ci-après.

Avantageusement, pour déterminer ledit gabarit caractéristique, le sens de mouvement de la cible sur lesdites prises de vue étant supposé connu :

$\alpha$) on effectue, pour chacune des lignes de l'enveloppe globale les opérations suivantes :

.   on recherche une configuration formée de deux groupes de même nombre de pixels adjacents présentant ladite première valeur, ainsi que d'une zone intermédiaire de pixels présentant ladite seconde valeur, située entre lesdits groupes ;
.   si une telle configuration existe, on détermine un segment caractéristique formé de ladite zone intermédiaire et du groupe situé en aval dans le sens de mouvement de la cible, sinon on passe à la ligne suivante de l'enveloppe globale ; et

$\beta$) on regroupe les segments caractéristiques ainsi déterminés de manière à obtenir ledit gabarit caractéristique.

Dans un mode de réalisation très avantageux de l'invention, pour déterminer le seuil de binarisation relatif à une image différentielle :

-   on détermine la luminance de tous les pixels de l'image différentielle ;
-   on forme un histogramme représentant le nombre de pixels par valeur de luminance croissante ;
-   on détermine une valeur supérieure de luminance Lsup correspondant à la luminance sur ledit histogramme d'un premier pourcentage du nombre total desdits pixels ;

-   on détermine une valeur inférieure de luminance Linf correspondant à la luminance sur ledit histogramme d'un second pourcentage, inférieur audit premier pourcentage, du nombre total desdits pixels ; et

-   on calcule le seuil de binarisation S à partir de la relation S = (Lsup+Linf)/2.

De préférence, lorsque la détection est effectuée à partir d'au moins trois prises de vue successives et lorsqu'au moins deux images binaires successives sont formées à partir desdites prises de vue, entre les étapes b) et c) du procédé précité, on effectue un filtrage temporel de l'image binaire considérée, en mettant en oeuvre un OU logique entre ladite image binaire et l'image binaire précédente, ce qui permet d'éliminer les mouvements parasites qui ne présentent pas une cohérence temporelle.

Par ailleurs, de façon avantageuse, entre les étapes c) et d) du procédé conforme à l'invention, on sélectionne toutes les zones individualisées présentant une surface qui est supérieure à une surface prédéterminée et on effectue les étapes ultérieures dudit procédé en utilisant uniquement les zones individualisées ainsi sélectionnées, ce qui permet d'éliminer des traitements les zones individualisées trop petites, notamment lorsqu'elles sont trop nombreuses, de telles zones de taille réduite étant généralement dues à des mouvements parasites.

Le procédé conforme à l'invention permet de déterminer de plus un motif de référence de la cible en mouvement. A cet effet, selon l'invention, on repère la position dudit gabarit caractéristique dans l'image d'analyse de la dernière desdites prises de vue et on extrait les pixels correspondant à cette position, les pixels ainsi extraits formant ledit motif de référence de la cible.

La présente invention concerne également un dispositif permettant de mettre en oeuvre le procédé précité. A cet effet, ledit dispositif comporte avantageusement :

-   des moyens pour effectuer des prises de vue du champ de vision du détecteur optique ;

-   des moyens pour extraire des images d'analyse des prises de vue ;

-   des moyens pour déterminer une image différentielle à partir des images d'analyse de deux prises de vue successives ;

-   des moyens pour déterminer une image binaire ;

-   des moyens pour individualiser les zones de l'image binaire, dont les pixels présentent ladite première valeur ;

-   des moyens pour former des enveloppes individuelles et une enveloppe globale ; et

-   des moyens d'analyse pour déterminer si un mouvement de la cible est détecté ou non, lesdits moyens d'analyse étant susceptibles de déterminer le cas échéant ledit gabarit caractéristique ; ainsi que si nécessaire :

-   des moyens pour déterminer le motif de référence de la cible ; et/ou

-   des moyens pour déterminer le seuil de binarisation.

Par ailleurs, la présente invention concerne également des applications du procédé conforme à l'invention pour déterminer la localisation d'une cible observée dans le champ de vision d'un détecteur optique, lesdites applications permettant de perfectionner la méthode de localisation d'une cible divulguée par la demanderesse dans la demande de brevet français 2 706 721 intitulée "Procédé et dispositif pour déterminer la localisation d'une cible".

La méthode citée dans ce document présente les caractéristiques suivantes :

-   dans une étape préliminaire, on effectue une prise de vue du champ de vision du détecteur optique et on détermine un modèle du fond comportant au moins une image partielle du fond et un modèle de la cible comportant au moins un motif de référence représentant au moins une image partielle de la cible, ainsi que des caractéristiques cinématiques de cette dernière ; et

-   pendant toute la durée de détermination de la localisation, on répète les étapes suivantes :

    .   on effectue une prise de vue actuelle du champ de vision ;

    .   on isole au moins une fenêtre de recherche du fond à partir de ladite prise de vue actuelle ;

    .   on recherche l'image partielle du fond dans ladite fenêtre de recherche isolée ;

    .   à partir de la position de cette image partielle dans ladite fenêtre de recherche, on calcule le déplacement du détecteur optique entre la prise de vue précédente et ladite prise de vue actuelle ;

    .   on isole une fenêtre de recherche de la cible à partir de la prise de vue actuelle, en tenant compte du déplacement calculé du détecteur optique et de la position de la cible dans la prise de vue précédente ;

    .   on recherche le motif de référence de la cible dans ladite fenêtre de recherche isolée ;

    .   à partir de la position de ce motif de référence dans ladite fenêtre de recherche, on calcule le déplacement de la cible par rapport au fond ;

    .   on compare ledit déplacement calculé de la cible à deux valeurs, minimale et maximale, de déplacement déterminées à partir des caractéristiques cinématiques de la cible, de sorte que si le déplacement calculé est compris entre lesdites deux valeurs, on valide la localisation de la cible obtenue par ce déplacement calculé, sinon on détermine une position estimée de la cible à partir des caractéristiques cinématiques de cette dernière ; et

. on remet à jour conditionnellement les modèles du fond et de la cible.

Un première application du procédé conforme à l'invention pour la localisation d'une cible, utilisant la méthode précitée, est remarquable selon la présente invention en ce que l'on met en oeuvre le procédé conforme à l'invention lors de chaque prise de vue et on remet à jour au moins partiellement le modèle de la cible lorsqu'un mouvement de la cible est détecté.

Une seconde application du procédé conforme à l'invention pour la localisation d'une cible, utilisant également ladite méthode précitée, est remarquable en ce que, pour remettre à jour le motif de référence du modèle de la cible, on met en oeuvre le procédé précité permettant de déterminer le motif de référence de la cible.

Les figures du dessin annexé feront bien comprendre comment l'invention peut être réalisée. Sur ces figures, des références identiques désignent des éléments semblables.

La figure 1 montre le schéma synoptique du dispositif conforme à l'invention associé à un détecteur optique pointé sur une cible.

Les figures 2 et 3 illustrent deux prises de vue successives du champ de vision du détecteur optique.

La figure 4 illustre le déplacement de la cible entre les deux prises de vue successives des figures 2 et 3.

Les figures 5 à 7 illustrent différentes étapes successives de traitement d'images, conformément à l'invention.

La figure 8 montre la détermination d'un gabarit caractéristique relatif à un mouvement de la cible.

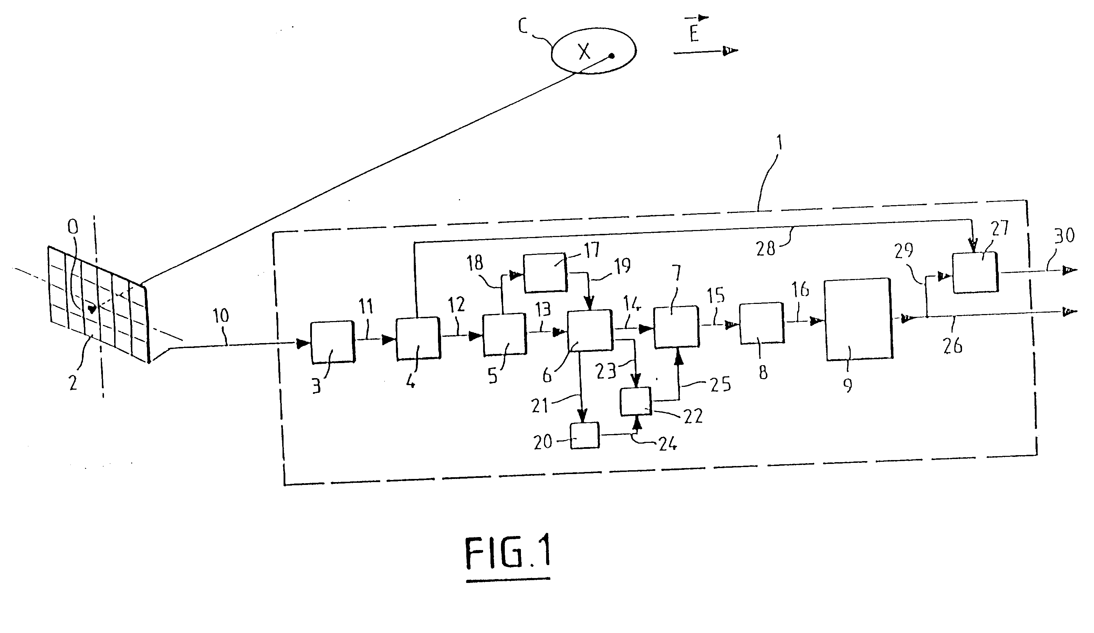

Le dispositif 1, conforme à la présente invention et représenté par son schéma synoptique sur la figure 1, est destiné à détecter le mouvement d'une cible C observée dans le champ de vision d'un détecteur optique 2 pointé suivant un axe OX, le dispositif 1 étant relié à cet effet audit détecteur optique 2.

Bien que non exclusivement, la présente invention est particulièrement bien adaptée à la poursuite d'une cible, en étant associée par exemple à cet effet à un système d'arme non représenté et équipé dudit détecteur optique 2, tel que décrit ci-après à titre d'exemple.

Selon l'invention, le dispositif 1 comporte des moyens principaux 3 à 9 reliés respectivement entre eux par des liaisons 11 à 16 et destinés à mettre en oeuvre respectivement les étapes successives du procédé conforme à l'invention, précisé lors de la description dudit dispositif 1.

Plus précisément, ledit dispositif 1 comporte des moyens de prise de vue 3, reliés par l'intermédiaire d'une liaison 10 au détecteur optique 2 et susceptibles d'effectuer une prise de vue du champ de vision de ce dernier. Les moyens de prise de vue 3 et le détecteur optique 2 reliés ensemble constituent, par exemple, une caméra visible ou infrarouge.

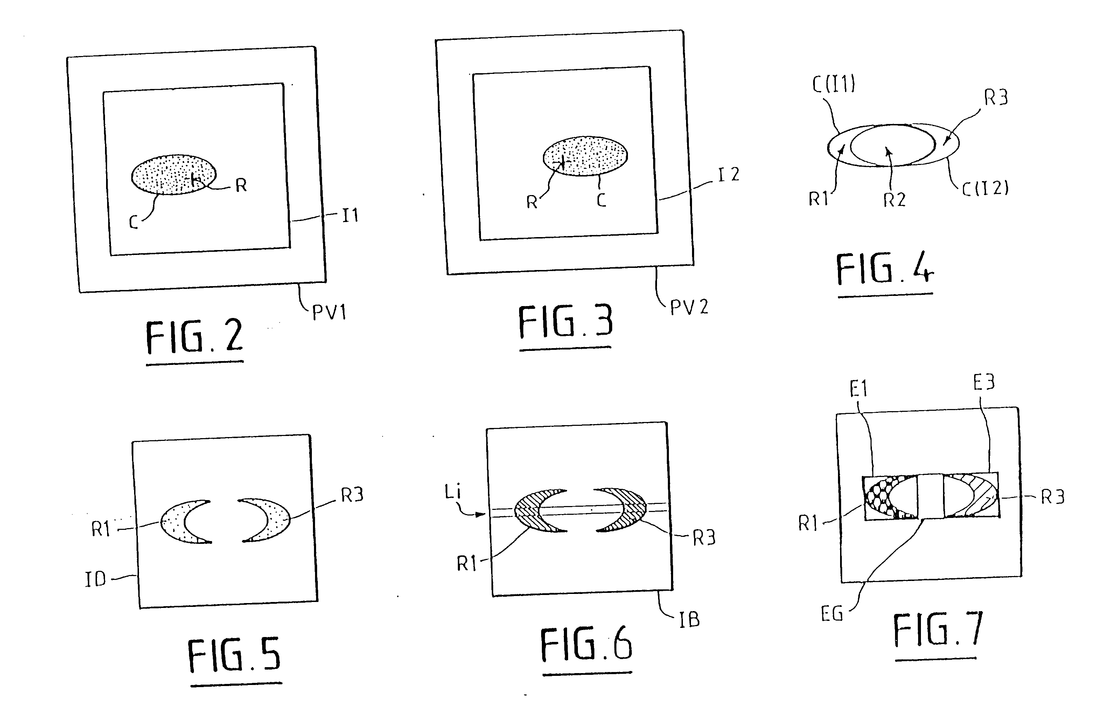

Sur la figure 2, on a représenté une prise de vue PV1 du champ de vision pour une position dudit détecteur optique 2, correspondant à la position représentée sur la figure 1.

Sur cette prise de vue PV1 qui est formée d'une matrice de pixels, la cible C est décalée vers la gauche par rapport à un réticule superposé R, déterminant le centre du champ de vision et correspondant à la direction de l'axe OX.

Pour des raisons de simplification du dessin et de la description correspondante, on a uniquement représenté sur cette prise de vue PV1 la cible C. Bien entendu, dans le cas où la prise de vue concerne une partie du paysage, ladite prise de vue peut comporter beaucoup d'autres éléments, comme des éléments naturels dudit paysage et/ou des objets artificiels, en mouvement ou non.

Pour la mise en oeuvre de l'invention, on nécessite deux prises de vue successives. Aussi, on a représenté sur la figure 3 une seconde prise de vue PV2 dudit champ de vision du détecteur optique 2 considéré comme immobile, ladite seconde prise de vue PV2 étant effectuée ultérieurement à la première prise de vue PV1, après un déplacement de la cible C dans le sens de la flèche E, comme visible à partir des figures 2 et 3.

On notera que, dans le cas où en plus du déplacement de la cible C, le détecteur optique 2 se déplace également entre les deux prises de vue PV1 et PV2, le déplacement relatif visible de la cible sur les deux prises de vue est alors bien entendu dû à ce double déplacement.

Les prises de vue PV1 et PV2 engendrées par les moyens 3 sont transmises par la liaison 11 aux moyens 4 destinés à extraire desdites prises de vue PV1 et PV2 des images d'analyse I1 et I2, de tailles déterminées identiques et situées respectivement à la même position par rapport auxdites prises de vue PV1 et PV2.

Dans le cas où les positions de la cible C dans les différentes prises de vue sont connues au moins approximativement, lesdites images d'analyse sont à peu près centrées sur ces positions.

Ainsi, dans l'exemple représenté sur les figures 2 et 3, dans lequel la cible se déplace à proximité du réticule R, les images d'analyse I1 et I2 sont situées approximativement au centre des prises de vue PV1 et PV2.

Le traitement conforme à l'invention est effectué sur les images d'analyse I1 et I2 ainsi extraites et transmises aux moyens 5. Selon l'invention, au cours de la mise en oeuvre de l'invention, la zone de traitement d'image considérée peut être réduite par rapport auxdites images d'analyse I1 et I2, pour augmenter la rapidité et la précision des traitements, ainsi que pour éliminer des détections ne devant pas être prises en compte, c'est-à-dire des mouvements parasites. Ainsi, lorsqu'un mouvement de cible est détecté dans une région déterminée d'une image d'analyse I1 ou I2, la zone de traitement peut être focalisée sur cette région déterminée. Ceci peut être effectué le cas échéant par itérations successives.

Les moyens 5 déterminent, quant à eux, à partir desdites images d'analyse I1 et I2 reçues, et comme explicité à partir de la figure 4 pour la cible C, une image différentielle ID représentée sur la figure 5.

Sur la figure 4, on a superposé les positions C(I1) et C(I2) de la cible C respectivement dans les deux images d'analyse I1 et I2. Cette représentation montre trois régions différentes :

- une région R1 constituée de pixels appartenant à la cible C dans l'image d'analyse I1 et au fond du champ de vision du détecteur optique 2 dans l'image d'analyse I2, suite au déplacement de la cible C ;
- une région R2 constituée de pixels appartenant à la cible C aussi bien dans l'image d'analyse I1 que dans l'image d'analyse I2 ; et
- une région R3 constituée de pixels appartenant au fond dans l'image d'analyse I1 et à la cible C dans l'image d'analyse I2.

Seules les régions R1 et R3 qui mettent en évidence un mouvement de la cible sont prises en compte dans l'image différentielle ID, comme précisé ci-dessous.

Ladite image différentielle ID représente une matrice de pixels, la valeur de chacun des pixels de ladite matrice correspondant à la valeur absolue de la différence des niveaux de gris des pixels situés à la même position respectivement dans lesdites deux images d'analyse I1 et I2.

L'image différentielle ID ainsi formée est transmise aux moyens 6 qui déterminent à partir de celle-ci, en utilisant un seuil de binarisation S précisé ci-dessous, une image binaire IB représentée sur la figure 6. Les pixels de ladite image binaire IB prennent une première valeur, par exemple 0, lorsque les valeurs des pixels correspondants de l'image différentielle ID sont supérieures ou égales audit seuil de binarisation S, comme par exemple pour les régions R1 et R3, et une seconde valeur, de préférence élevée, dans le cas contraire.

Les zones présentant la première valeur sont donc considérées comme des zones de mouvement et celles présentant la seconde valeur comme des zones immobiles.

Le seuil de binarisation utilisé peut être une valeur prédéterminée et stockée par exemple dans lesdits moyens 6.

On remarquera que ledit seuil de binarisation doit être le résultat d'un compromis entre la rapidité de détection du mouvement de la cible et la quantité de mouvements parasites détectés. En effet, plus le seuil est bas, plus on détecte le mouvement de la cible, mais également des mouvements parasites. Or, si les mouvements parasites deviennent trop importants, il peut devenir difficile, voire même impossible, de détecter le mouvement de la cible.

Aussi, pour tenir compte de ces remarques, le dispositif 1 comporte avantageusement des moyens 17 reliés par des liaisons 18 et 19 respectivement aux moyens 5 et 6 et permettant d'adapter le seuil de binarisation au traitement en cours, et en particulier à l'image différentielle utilisée, ainsi qu'à la quantité de mouvement à détecter souhaitée.

Selon l'invention, pour déterminer le seuil de binarisation S relatif à une image différentielle ID reçue des moyens 5, lesdits moyens 17 effectuent les opérations suivantes :

- ils déterminent la luminance de tous les pixels de l'image différentielle ID ;
- ils forment un histogramme non montré représentant le nombre de pixels par valeur de luminance croissante ;
- ils déterminent une valeur supérieure de luminance Lsup correspondant à la luminance sur ledit histogramme d'un premier pourcentage, par exemple 95%, du nombre total desdits pixels ;
- ils déterminent une valeur inférieure de luminance Linf correspondant à la luminance sur ledit histogramme d'un second pourcentage, par exemple 5%, inférieur audit premier pourcentage, du nombre total desdits pixels ; et
- ils calculent le seuil de binarisation S à partir de la relation $S = (Lsup+Linf)/2$.

L'image binaire IB est ensuite transmise :

- d'abord aux moyens 7 qui individualisent les zones de mouvement, c'est-à-dire qu'ils regroupent les pixels adjacents présentant ladite première valeur en zones individualisées, comme par exemple les régions R1 et R3, et différencient entre elles ces zones individualisées, la région R1 étant représentée à cet effet sous forme de damier sur la figure 7 et la région R3 sous forme de zone hachurée ;
- puis aux moyens 8 qui :

  . d'une part, déterminent pour chacune desdites zones individualisées R1 et R3, une enveloppe individuelle respectivement E1 et E3, de forme rectangulaire, entourant ladite zone individualisée, et

  . d'autre part, déterminent une enveloppe globale EG, également de forme rectangulaire, entourant toutes les enveloppes individuelles E1 et E3 ainsi formées.

Toutefois, afin de ne pas prendre en compte trop de zones de mouvements parasites, on effectue dans un mode de réalisation particulièrement avantageux de l'invention un filtrage temporel de l'image binaire IB avant de la transmettre aux moyens 7.

A cet effet, le dispositif 1 comporte :

- une mémoire 20 reliée aux moyens 6 par une liaison 21 et stockant une image binaire issue d'un traitement précédent ; et
- une porte logique OU 22 reliée par l'intermédiaire de liaisons 23 et 24 respectivement aux moyens 6 et à ladite mémoire 20 et effectuant un OU logique entre l'image binaire en cours de traitement reçue des moyens 6 et l'image binaire du traitement précédent reçue de la mémoire 20. La porte logique OU 22 transmet l'image ainsi filtrée aux moyens 7 par une liaison 25.

Ce filtrage permet de ne conserver que les zones de mouvement présentant une cohérence dans le temps, ce qui n'est pas le cas généralement pour les zones de mouvements parasites.

Par ailleurs, dans un mode de réalisation avantageux, on sélectionne sur l'image binaire toutes les zones individualisées présentant une surface qui est supérieure à une surface prédéterminée et on ne prend en compte dans la suite des traitements que les zones individualisées ainsi sélectionnées.

Ce mode de réalisation est particulièrement avantageux lorsque l'image binaire présente un grand nombre de petites zones individualisées qui sont généralement dues à des mouvements parasites. Ledit mode de réalisation permet donc, conjointement avec le filtrage temporel décrit précédemment, d'éliminer des informations non intéressantes pour les traitements à effectuer.

Les moyens d'analyse 9 reçoivent les traitements effectués par les moyens 8 et ils déduisent :

- qu'il n'y a pas de détection de mouvement de la cible C dans les cas suivants :

    . lorsqu'il n'existe aucune enveloppe individuelle, puisqu'alors aucun mouvement n'a été détecté,
    . lorsqu'il existe une seule enveloppe individuelle, puisqu'il est alors impossible de déterminer si la zone détectée est une région du fond qui est découverte ou recouverte par la cible ; et/ou
    . lorsque l'enveloppe globale présente une surface inférieure à une surface prédéterminée puisque la fiabilité des traitements peut alors être mise en doute ; et

- que, dans les autres cas, un mouvement de la cible C est détecté.

Lorsqu'un mouvement de la cible C est détecté, les moyens d'analyse 9 peuvent de plus déterminer un gabarit caractéristique non représenté, correspondant audit mouvement de la cible et relatif à la position de la cible C dans la seconde desdites prises de vue PV2.

Selon l'invention, pour déterminer ledit gabarit caractéristique :

$\alpha$) on effectue, pour chacune des lignes de l'enveloppe globale EG, les opérations suivantes :

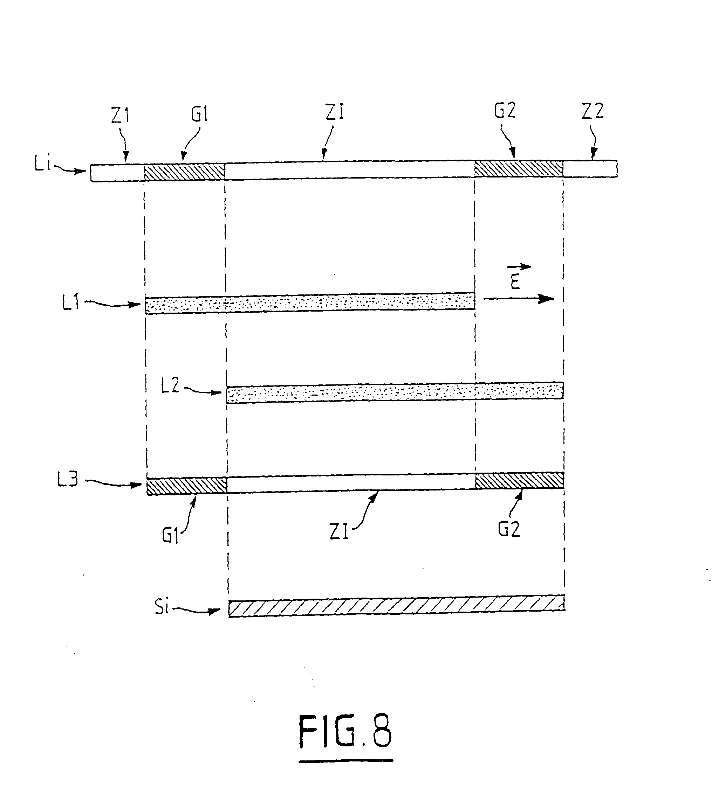

    . on recherche une configuration formée de deux groupes G1 et G2 de même nombre de pixels adjacents présentant ladite première valeur, ainsi que d'une zone intermédiaire ZI de pixels présentant ladite seconde valeur, située entre lesdits groupes G1 et G2, tel que représenté sur la figure 8 pour une ligne Li également indiquée sur la figure 6 ;
    . si une telle configuration existe, on détermine un segment caractéristique Si formé de ladite zone intermédiaire ZI et du groupe G2 situé en aval dans le sens de mouvement $\vec{E}$ de la cible, sinon on passe à la ligne suivante de l'enveloppe globale EG ; et

$\beta$) on regroupe les segments caractéristiques Si ainsi déterminés de manière à obtenir ledit gabarit caractéristique.

De préférence, en particulier pour des facilités de traitement des données, on forme à partir dudit gabarit caractéristique une matrice caractéristique de forme rectangulaire, les pixels de cette matrice relatifs à une zone de mouvement, c'est-à-dire correspondant audit gabarit caractéristique, prenant une certaine valeur, par exemple 1, les autres pixels prenant une autre valeur, par exemple 0.

Sur la figure 8, on a représenté successivement du haut vers le bas, avec un décalement correspondant vers la droite ou la gauche de manière à mettre en évidence les différents liens :

- la ligne Li de l'image binaire IB qui comporte, en plus des zones citées G1, ZI et G2, des zones extrêmes Z1 et Z2 représentées sans mouvement. Bien entendu, dans les zones Z1, Z2 ou ZI, il peut apparaître des zones partielles de mouvement, correspondant à des mouvements parasites et non pris en compte s'il n'existe pas de zone associée de même taille sur la ligne Li, comme cela est le cas pour les groupes de pixels G1 et G2 ;
- une ligne partielle L1 formée des pixels de la cible C dans la ligne Li de l'image d'analyse I1 ;
- une ligne partielle L2 formée des pixels de la cible C dans la ligne Li de l'image d'analyse I2, la ligne partielle L2 étant décalée par rapport à la ligne L1 en raison du déplacement de la cible suivant la flèche $\vec{E}$ entre les images d'analyse I1 et I2 ;
- une ligne partielle L3 comportant uniquement les zones de la ligne Li utiles à la détection ; et
- le segment caractéristique Si, situé bien entendu à la même position que L2 lorsque toute la cible considérée est en mouvement.

Les moyens d'analyse 9 peuvent transmettre les résultats obtenus par l'intermédiaire d'une liaison 26 à un dispositif utilisateur non représenté.

Par ailleurs, la présente invention permet également de déterminer un motif de référence non représenté de la cible C en mouvement.

A cet effet, le dispositif 1 comporte des moyens 27 qui sont reliés par des liaisons 28 et 29 respectivement aux moyens 4 et 9 et qui, pour déterminer un motif de référence de la cible, effectuent les opérations suivantes :

- ils repèrent la position dudit gabarit caractéristique, c'est-à-dire la position des zones de mouvement de ladite matrice caractéristique, dans l'image d'analyse I2 de la dernière desdites prises de vue PV2, et
- ils extraient les pixels correspondant à cette position, les pixels ainsi extraits formant ledit motif de référence de la cible.

Les résultats ainsi obtenus peuvent ensuite être communiqués par une liaison 30 à un dispositif utilisateur non représenté.

Le dispositif 1 conforme à l'invention est en outre particulièrement bien adapté à la poursuite de cibles, en étant par exemple intégré à cet effet dans un système d'arme non représenté, en particulier un système antichar, équipé dudit détecteur optique 2 et susceptible de détruire la cible poursuivie.

Le procédé conforme à l'invention présente de nombreuses applications possibles. Ainsi, deux applications dudit procédé, précisées ci-dessous, permettent notamment de perfectionner avantageusement la méthode précitée de localisation d'une cible, divulguée par la demande de brevet français 2 706 721 de la demanderesse.

Ladite méthode utilise, comme indiqué précédemment, un modèle de la cible comportant au moins un motif de référence de celle-ci, devant parfois être remis à jour sous certaines conditions au cours de la mise en oeuvre de ladite méthode.

Dans une première application de l'invention utilisant cette méthode, on met en oeuvre le procédé conforme à l'invention lors de chaque prise de vue et on remet à jour, au moins partiellement, le modèle de la cible, c'est-à-dire au moins ledit motif de référence, lorsqu'un mouvement de la cible est détecté, ce qui procure à ladite méthode une condition précise de remise à jour du modèle.

Dans une seconde application de l'invention utilisant cette méthode, on remet à jour le motif de référence lorsque nécessaire, de la manière décrite précédemment conformément à l'invention, ce qui procure à ladite méthode une technique efficace de remise à jour du modèle.

## Revendications

1. Procédé pour détecter le mouvement d'une cible (C) observée dans le champ de vision d'un détecteur optique (2), à partir de deux prises de vue successives (PV1, PV2) dudit champ de vision, chacune desdites prises de vue (PV1, PV2) étant formée d'une matrice de pixels,
caractérisé en ce que l'on effectue les opérations suivantes :

   a) on détermine une image différentielle (ID) à partir de deux images d'analyse (I1, I2) de tailles identiques correspondant respectivement à au moins une partie desdites prises de vue successives (PV1, PV2), ladite image différentielle (ID) correspondant à une matrice de pixels, et la valeur de chacun des pixels de ladite matrice correspondant à la valeur absolue de la différence des niveaux de gris des pixels situés à la même position respectivement dans lesdites deux images d'analyse (I1, I2) ;
   b) à partir de ladite image différentielle (ID) et d'un seuil de binarisation déterminé, on forme une image binaire (IB), les pixels de ladite image binaire (IB) prenant une première valeur si les valeurs des pixels correspondants de l'image différentielle (ID) sont supérieures ou égales audit seuil de binarisation, et une seconde valeur sinon ;
   c) on individualise sur ladite image binaire (IB) les zones (R1, R3) dont les pixels présentent ladite première valeur ;
   d) on détermine, pour chacune desdites zones individualisées (R1, R3), une enveloppe individuelle (E1, E3), de forme déterminée, entourant ladite zone individualisée (R1, R3) ;
   e) on détermine une enveloppe globale (EG), de forme déterminée, entourant les enveloppes individuelles (E1, E3) ainsi formées ; et
   f) on déduit :

   . s'il existe moins de deux enveloppes individuelles (E1, E2) et/ou si l'enveloppe globale (EG) présente une surface qui est inférieure à une surface prédéterminée, qu'il n'y a pas de détection de mouvement de la cible (C) ;
   . sinon, qu'un mouvement de la cible (C) est détecté, un gabarit caractéristique correspondant audit mouvement de la cible et relatif à la position de la cible dans la seconde desdites prises de vue (PV2) pouvant être déterminé dans ce cas.

2. Procédé selon la revendication 1, le sens de mouvement ($\vec{E}$) de la cible (C) sur lesdites prises de vue (PV1, PV2) étant connu,

caractérisé en ce que, pour déterminer ledit gabarit caractéristique :

α) on effectue, pour chacune des lignes (Li) de l'enveloppe globale (EG) les opérations suivantes :

- on recherche une configuration formée de deux groupes (G1, G2) de même nombre de pixels adjacents présentant ladite première valeur, ainsi que d'une zone intermédiaire (ZI) de pixels présentant ladite seconde valeur, située entre lesdits groupes (G1, G2) ;
- si une telle configuration existe, on détermine un segment caractéristique (Si) formé de ladite zone intermédiaire (ZI) et du groupe (G2) situé en aval dans le sens de mouvement ($\vec{E}$) de la cible (C), sinon on passe à la ligne suivante de l'enveloppe globale (EG) ; et

β) on regroupe les segments caractéristiques (Si) ainsi déterminés de manière à obtenir ledit gabarit caractéristique.

3. Procédé selon l'une quelconque des revendications précédentes,
   caractérisé en ce que lesdites enveloppes individuelles (E1, E3) et ladite enveloppe globale (EG) présentent une forme rectangulaire.

4. Procédé selon l'une quelconque des revendications précédentes,
   caractérisé en ce que, pour déterminer le seuil de binarisation relatif à une image différentielle (ID) :

   - on détermine la luminance de tous les pixels de l'image différentielle (ID) ;
   - on forme un histogramme représentant le nombre de pixels par valeur de luminance croissante ;
   - on détermine une valeur supérieure de luminance Lsup correspondant à la luminance sur ledit histogramme d'un premier pourcentage du nombre total desdits pixels ;
   - on détermine une valeur inférieure de luminance Linf correspondant à la luminance sur ledit histogramme d'un second pourcentage, inférieur audit premier pourcentage, du nombre total desdits pixels ; et
   - on calcule le seuil de binarisation S à partir de la relation S = (Lsup+Linf)/2.

5. Procédé selon l'une quelconque des revendications précédentes, la détection étant effectuée à partir d'au moins trois prises de vue successives et au moins deux images binaires successives étant formées à partir desdites prises de vue,
caractérisé en ce que, entre les étapes b) et c), on effectue un filtrage temporel de l'image binaire considérée, en mettant en oeuvre un OU logique entre ladite image binaire et l'image binaire précédente.

6. Procédé selon l'une quelconque des revendications précédentes,
   caractérisé en ce qu'entre les étapes c) et d), on sélectionne toutes les zones individualisées présentant une surface qui est supérieure à une surface prédéterminée et on effectue les étapes ultérieures du procédé en utilisant uniquement les zones individualisées ainsi sélectionnées.

7. Procédé selon l'une quelconque des revendications précédentes, permettant de déterminer de plus un motif de référence de la cible (C) en mouvement,
   caractérisé en ce qu'on repère la position dudit gabarit caractéristique dans l'image d'analyse (I2) de la dernière desdites prises de vue (PV2) et on extrait les pixels correspondant à cette position, les pixels ainsi extraits formant ledit motif de référence de la cible.

8. Dispositif pour la mise en oeuvre du procédé spécifié sous l'une des revendications 1 à 7,
   caractérisé en ce qu'il comporte :

   - des moyens (3) pour effectuer des prises de vue (PV1, PV2) du champ de vision du détecteur optique (2) ;
   - des moyens (4) pour extraire des images d'analyse (I1, I2) desdites prises de vue (PV1, PV2) ;
   - des moyens (5) pour déterminer une image différentielle (ID) à partir des images d'analyse (I1, I2) de deux prises de vue successives (PV1, PV2) ;
   - des moyens (6) pour déterminer une image binaire (IB) ;
   - des moyens (7) pour individualiser les zones (R1, R3) de l'image binaire (IB), dont les pixels présentent ladite première valeur ;
   - des moyens (8) pour former des enveloppes individuelles (E1, E3) et une enveloppe globale (EG) ; et
   - des moyens d'analyse (9) pour déterminer si un mouvement de la cible (C) est détecté ou non, lesdits moyens d'analyse (9) étant susceptibles de déterminer le cas échéant ledit gabarit caractéristique.

9. Dispositif selon la revendication 8,
   caractérisé en ce qu'il comporte des moyens (17) pour déterminer le seuil de binarisation.

10. Dispositif selon l'une des revendications 8 ou 9, destiné plus particulièrement à la mise en oeuvre du procédé spécifié sous la revendication 7, caractérisé en ce qu'il comporte des moyens (27) pour déterminer le motif de référence de la cible.

11. Application du procédé spécifié sous l'une quelconque des revendications 1 à 7, pour déterminer la localisation d'une cible observée dans le champ de vision d'un détecteur optique, utilisant une méthode présentant les caractéristiques suivantes :

-    dans une étape préliminaire, on effectue une prise de vue du champ de vision du détecteur optique et on détermine un modèle du fond comportant au moins une image partielle du fond et un modèle de la cible comportant au moins un motif de référence représentant au moins une image partielle de la cible, ainsi que des caractéristiques cinématiques de cette dernière ; et

-    pendant toute la durée de détermination de la localisation, on répète les étapes suivantes :

   .    on effectue une prise de vue actuelle du champ de vision ;
   .    on isole au moins une fenêtre de recherche du fond à partir de ladite prise de vue actuelle ;
   .    on recherche l'image partielle du fond dans ladite fenêtre de recherche isolée ;
   .    à partir de la position de cette image partielle dans ladite fenêtre de recherche, on calcule le déplacement du détecteur optique entre la prise de vue précédente et ladite prise de vue actuelle ;
   .    on isole une fenêtre de recherche de la cible à partir de la prise de vue actuelle, en tenant compte du déplacement calculé du détecteur optique et de la position de la cible dans la prise de vue précédente ;
   .    on recherche le motif de référence de la cible dans ladite fenêtre de recherche isolée ;
   .    à partir de la position de ce motif de référence dans ladite fenêtre de recherche, on calcule le déplacement de la cible par rapport au fond ;
   .    on compare ledit déplacement calculé de la cible à deux valeurs, minimale et maximale, de déplacement déterminées à partir des caractéristiques cinématiques de la cible, de sorte que si le déplacement calculé est compris entre lesdites deux valeurs, on valide la localisation de la cible obtenue par ce déplacement calculé, sinon on détermine une position estimée de la cible à partir des caractéristiques cinématiques de cette dernière ; et . on remet à jour conditionnellement les modèles du fond et de la cible,

caractérisée en ce que l'on met en oeuvre le procédé spécifié sous l'une quelconque des revendications 1 à 7 lors de chaque prise de vue et on remet à jour, au moins partiellement, le modèle de la cible lorsqu'un mouvement de la cible est détecté.

12. Application du procédé spécifié sous la revendication 7, pour déterminer la localisation d'une cible observée dans le champ de vision d'un détecteur optique, utilisant une méthode présentant les caractéristiques suivantes :

-    dans une étape préliminaire, on effectue une prise de vue du champ de vision du détecteur optique et on détermine un modèle du fond comportant au moins une image partielle du fond et un modèle de la cible comportant au moins un motif de référence représentant au moins une image partielle de la cible, ainsi que des caractéristiques cinématiques de cette dernière ; et

-    pendant toute la durée de détermination de la localisation, on répète les étapes suivantes :

   .    on effectue une prise de vue actuelle du champ de vision ;
   .    on isole au moins une fenêtre de recherche du fond à partir de ladite prise de vue actuelle ;
   .    on recherche l'image partielle du fond dans ladite fenêtre de recherche isolée ;
   .    à partir de la position de cette image partielle dans ladite fenêtre de recherche, on calcule le déplacement du détecteur optique entre la prise de vue précédente et ladite prise de vue actuelle ;
   .    on isole une fenêtre de recherche de la cible à partir de la prise de vue actuelle, en tenant compte du déplacement calculé du détecteur optique et de la position de la cible dans la prise de vue précédente ;
   .    on recherche le motif de référence de la cible dans ladite fenêtre de recherche isolée ;
   .    à partir de la position de ce motif de référence dans ladite fenêtre de recherche, on calcule le déplacement de la cible par rapport au fond ;
   .    on compare ledit déplacement calculé de la cible à deux valeurs, minimale et maximale, de déplacement déterminées à partir des caractéristiques cinématiques de la cible, de sorte que si le déplacement calculé est compris entre lesdites deux valeurs, on valide la localisation de la cible obtenue par ce déplacement calculé, sinon on détermine une position estimée de la cible à partir des caractéristiques cinématiques de cette dernière ; et

. on remet à jour conditionnellement les modèles du fond et de la cible,

caractérisée en ce que, pour remettre à jour le motif de référence du modèle de la cible, on met en oeuvre le procédé spécifié sous la revendication 7.

FIG.1

C(I1)   R3
R1   R2   C(I2)

FIG. 4

C   R   I1
PV1

FIG. 2

R   C   I2
PV2

FIG. 3

R1   R3
ID

FIG. 5

Li   R3
R1   IB

FIG. 6

E1   E3
R1   R3
EG

FIG. 7

EP 0 745 866 A1

FIG.8

EP 0 745 866 A1

Office européen
des brevets

**RAPPORT DE RECHERCHE EUROPEENNE**

Numero de la demande

EP 96 40 0960

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON PATTERN ANALYSIS AND MACHINE INTELLIGENCE, JAN. 1981, USA, vol. PAMI-3, no. 1, ISSN 0162-8828, pages 12-20, XP002012094 YACHIDA M ET AL: "Automatic analysis of moving images" * page 13, colonne de droite, ligne 27 - page 14, colonne de gauche, ligne 23; figures 3,4 * * page 15, colonne de droite, ligne 6 - page 16, colonne de gauche, ligne 19; figure 9 * | 1,8,11 | G01S3/786 G06T7/20 |
| A | US-A-4 364 089 (WOOLFSON MARTIN G) 14 Décembre 1982 * colonne 8, ligne 54 - colonne 9, ligne 12; figures 5,6 * | 1,8,11 | |
| A | US-A-3 829 614 (AHLBOM S ET AL) 13 Août 1974 * abrégé; figures 1,4 * | 1 | |
| A | ADVANCES IN INSTRUMENTATION, vol. 43, no. PART 01, 1 Janvier 1988, pages 289-304, XP000097293 CELENK M ET AL: "MOVING OBJECT TRACKING IN INDUSTRIAL WORK STATIONS" * page 292, ligne 18 - ligne 30 * | 1,8 | DOMAINES TECHNIQUES RECHERCHES (Int.Cl.6) G01S G06T H04N |
| A | DE-A-29 37 284 (MICRO CONSULTANTS LTD) 27 Mars 1980 * page 10, ligne 1 - page 11, ligne 5; figures 4,5 * | 1,8 | |

Le présent rapport a été établi pour toutes les revendications

| Lieu de la recherche | Date d'achèvement de la recherche | Examinateur |
|---|---|---|
| LA HAYE | 29 Août 1996 | Haffner, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant